# FASCICULE DE BREVET EUROPEEN

(11) **EP 3 280 747 B1**
(45) Date de publication et mention de la délivrance du brevet: **09.03.2022**
(21) Numéro de dépôt: 16713356.0
(22) Date de dépôt: 23.03.2016
(51) Int. Cl.: C08F 236/08, C08L 7/00, C08L 9/00

(54) **PROCÉDÉ DE SYNTHÈSE D'UN COPOLYMÈRE PORTANT DES GROUPES PENDANTS IMIDAZOLE**
VERFAHREN ZUR HERSTELLUNG VON COPOLYMEREN MIT IMIDAZOL-SEITENGRUPPEN
PROCESS TO PREPARE COPOLYMERS HAVING PENDANT IMIDAZOLE GROUPS

(30) Priorité: 07.04.2015 FR 1552964
(43) Date de publication de la demande: 14.02.2018
(73) Titulaire: Compagnie Générale des Etablissements Michelin, 63000 Clermont-Ferrand (FR)
(72) Inventeur: RANNOUX, Claire, CH - 1110, Morges (CH); MATMOUR, Rachid, 63040 Clermont-Ferrand Cedex 9 (FR); LOUBAT, Cédric, 34160 Castries (FR)
(74) Mandataire: Gandon-Pain, Sylvie
(86) Numéro de dépôt international: PCT/EP2016/056307
(87) Numéro de publication internationale: WO 2016/162206

(56) Documents cités:
- EP-A1- 2 459 602
- EP-A2- 1 193 558
- FR-A1- 2 225 445
- SU-A1- 1 599 383
- US-A- 6 031 038

## Description

La présente invention concerne un procédé de synthèse d'un copolymère, le copolymère et la composition le contenant.

La structure chimique d'un polymère impacte généralement les propriétés chimiques et physiques du polymère, ainsi que les propriétés des compositions le contenant. La modification de structure d'un polymère, telle que la fonctionnalisation d'un polymère, est particulièrement recherchée lorsque l'on souhaite mettre en présence un polymère et une charge dans une composition. La modification chimique d'un polymère peut améliorer la dispersion de la charge dans le polymère et permettre ainsi l'obtention d'un matériau davantage homogène. Dans le cas de certaines charges, comme le noir de carbone ou la silice, une meilleure dispersion de la charge va généralement se traduire par une baisse d'hystérèse de la composition. Une telle propriété est recherchée, notamment dans les compositions de caoutchouc destinées par exemple à des applications pour pneumatique.

La préparation de polymère permettant d'améliorer la dispersion de charge dans une composition polymère est fortement documentée. On peut citer les procédés de modification de polymère par fonctionnalisation d'un bout de chaine en croissance d'un polymère, par modification d'une ou plusieurs unités monomères du polymère, par copolymérisation avec un co-monomère portant une fonction interactive avec la charge renforçante de la chaîne polymère. Il est toujours d'intérêt notamment pour les manufacturiers de pneumatiques de trouver des nouveaux procédés pour l'obtention de nouveaux polymères qui facilitent et améliorent la dispersion des charges dans une composition polymère.

Les Demanderesses ont découvert un procédé relativement simple et flexible dans sa mise en œuvre qui permet de préparer un copolymère portant des groupes pendants imidazole et permettant d'améliorer la dispersion d'une charge renforçante dans une composition polymère. La simplicité et la flexibilité du procédé résident dans l'accessibilité des réactifs, en particulier des monomères, utiles aux besoins de l'invention, et dans l'accessibilité à une grande variété de microstructure du copolymère.

Ainsi, un premier objet de l'invention est un procédé de synthèse d'un copolymère portant des groupes pendants imidazole, lequel procédé comprend la copolymérisation radicalaire d'un mélange monomère comprenant une oléfine terminale et un monomère fonctionnel portant un groupe (méth)acryloyle et un groupe imidazole.

Un autre objet de l'invention est un copolymère susceptible d'être obtenu par le procédé conforme à l'invention.

L'invention concerne également une composition, notamment de caoutchouc, qui est à base d'une charge renforçante, d'un système de réticulation et d'une matrice polymère contenant le copolymère conforme l'invention.

L'invention a aussi pour objet un pneumatique comprenant la composition conforme à l'invention.

### I-DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Le procédé de polymérisation peut être continu ou discontinu, en masse, en solution, en suspension ou en émulsion, dans un batch alimenté ou dans un réacteur fermé. Selon la microstructure souhaitée et selon la réactivité des monomères du mélange monomère, l'homme du métier adaptera les conditions de polymérisation, notamment pour conduire à une copolymérisation statistique. Pour une polymérisation radicalaire, qu'elle soit en solution, en suspension, en masse ou en émulsion, les monomères, l'amorceur de polymérisation ainsi que les autres constituants du milieu de polymérisation peuvent être introduits dans le réacteur en une seule charge au début de la polymérisation ou de manière continue ou séquencée tout au long de la polymérisation.

La polymérisation radicalaire est conduite à des températures variant de -10°C à 200°C, de préférence de 0 à 100°C, la température étant choisie par l'homme du métier en tenant compte notamment de la réactivité du milieu de polymérisation et de sa concentration.

L'amorceur de polymérisation peut être tout amorceur de polymérisation radicalaire conventionnel, notamment à titre d'exemple un peroxyde organique tel que le peroxyde de benzoyle, peroxyde de lauroyle, hydroperoxyde de tert-butyle, hydroperoxyde de cumyle, hydroperoxyde de para-menthyle, peroxyde de di-ter-butyle, peroxyde de dicumyle. Par ailleurs, les amorceurs de polymérisation radicalaire peuvent inclure également les peracides et leurs esters tels que l'acide peracétique et le persulfate de potassium. Chaque amorceur de polymérisation radicalaire peut être utilisé seul ou en combinaison avec au moins un autre amorceur de polymérisation radicalaire.

A titre de polymérisation radicalaire, on peut aussi recourir à la polymérisation radicalaire contrôlée qui permet un degré élevé de contrôle de la macrostructure et de la microstructure du polymère. La polymérisation radicalaire contrôlée est connue de l'homme de l'art et décrite dans de nombreux ouvrages. Parmi les polymérisations radicalaires contrôlées, on dénombre par exemple la polymérisation radicalaire par transfert d'atomes (Atom Transfer Radical Polymerization en anglais, ATRP), la polymérisation radicalaire contrôlée par les nitroxides (Nitroxide Mediated Polymerization, NMP), la polymérisation radicalaire contrôlée par transfert de chaîne réversible par addition-fragmentation (Reversible Addition Fragmentation Transfer, RAFT).

Dans le milieu réactionnel de la polymérisation radicalaire, des agents de transfert comme les mercaptans, en particulier le tert-dodécylmercaptan, le n-dodécylmercaptan ou comme le tétrachlorure de carbone ou encore le di- ou triterpène peuvent également être utilisés seuls ou en combinaison.

Pour une polymérisation radicalaire conduite en émulsion, les tensioactifs employés dans la polymérisation en émulsion peuvent être anioniques, cationiques, non ioniques ou des espèces amphotères. Ils peuvent être utilisés seuls ou en combinaison.

Pour une polymérisation radicalaire conduite en suspension, les stabilisants employés dans la polymérisation en suspension peuvent être par exemple et de manière non exhaustive le poly(alcool vinylique), le poly(acrylate de sodium), l'hydroxyéthycellulose.

La polymérisation radicalaire est réalisée de manière conventionnelle sous atmosphère inerte, par exemple sous azote ou sous argon. La durée typique de la polymérisation est comprise entre 15 min et 48h, plus communément entre 1 h et 24 h.

Le monomère fonctionnel utile aux besoins de l'invention est un monomère qui porte à la fois un groupe (méth)acryloyle et un groupe imidazole.

Dans la présente demande, le groupe (méth)acryloyle désigne le groupe acryloyle ou le groupe méthacryloyle.

Le groupe imidazole désigne le radical hétérocyclique C₃H₃N₂, les atomes de carbone du cycle pouvant être substitués, notamment pour former un cycle comme dans le cas du radical benzimidazole.

Selon un mode de réalisation de l'invention, le groupe (méth)acryloyle présente un rattachement direct ou indirect à l'atome d'azote du groupe imidazole. Le monomère fonctionnel est choisi de préférence parmi le monomère de formule (I), le monomère de formule (II) et leur mélange, R étant méthyle ou hydrogène, A un groupement alkylène pouvant contenir un ou plusieurs hétéroatomes.

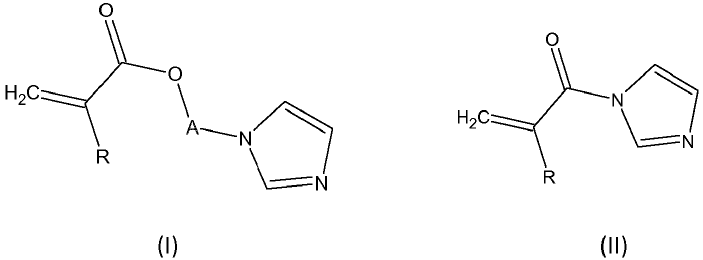

Parmi les monomères fonctionnels de formule (I), on peut citer les (1-imidazolyl)alkylméthacrylates comme le (1-imidazolyl)-2-éthylméthacrylate, le (1-imidazolyl)-2-méthylméthacrylate, (1-imidazolyl)-2-éthylacrylate, le (1-imidazolyl)-2-méthylacrylate. De tels composés sont par exemple décrits dans les brevets US 2,727,021 et US 2,643,990.

Parmi les monomères fonctionnels de formule (I), on peut aussi citer les isocyanatoalkyl(méth)acrylate dont la fonction isocyanate est bloquée par le groupe imidazole. Il peut s'agir de composé dans lequel le symbole A de la formule (I) représente le groupe A1-NH-CO dans lequel le symbole A1 désigne un groupe alkylène comportant de préférence 1 à 6 atomes de carbone. Selon un mode de réalisation de l'invention, A1 est le groupement 1,2-éthanediyle. A titre de monomère fonctionnel de formule (I) conviennent par exemple l'ester de 1-imidazolecarbonylamino-2-éthyle de l'acide acrylique ou de l'acide méthacrylique. De tels composés sont décrits dans la demande de brevet EP 2 377 847 A1.

Selon un mode de réalisation particulier de l'invention, le monomère fonctionnel est de préférence un isocyanatoalkyl(méth)acrylate dont la fonction isocyanate est bloquée par le groupe imidazole, de manière plus préférentielle l'ester de 1-imidazolylcarbonylamino-2-éthyle de l'acide acrylique ou de l'acide méthacrylique.

Selon un autre mode de réalisation particulier de l'invention, le monomère fonctionnel est le N-acryloylimidazole ou le N-méthacryloylimidazole. Ces composés sont par exemple décrits dans le brevet US 3,332,980.

L'autre monomère utile aux besoins de l'invention est une oléfine terminale. Dans la présente demande, on entend par oléfine terminale un composé hydrocarboné présentant une double liaison carbone-carbone en extrémité de la chaîne hydrocarbonée.

Parmi les oléfines terminales qui conviennent, on peut citer celles contenant 2 à 12 atomes de carbone, qu'elles soient aliphatiques ou aromatiques

Selon un mode de réalisation de l'invention, l'oléfine terminale est l'éthylène, un diène conjugué ou leur mélange.

Le diène conjugué est, par définition de l'oléfine terminale, un 1,3-diène contenant de préférence 4 à 12 atomes de carbone, de manière préférentielle le butadiène, l'isoprène ou leur mélange.

Selon une première variante de ce mode de réalisation selon lequel l'oléfine terminale est l'éthylène, un diène conjugué ou leur mélange, le mélange monomère comprend en plus de l'oléfine terminale et du monomère fonctionnel un autre monomère présentant une double liaison éthylénique.

Dans le mode de réalisation particulier selon lequel l'oléfine terminale est l'éthylène, cet autre monomère est préférentiellement un ester vinylique d'acide carboxylique ayant 1 à 4 atomes de carbone, plus préférentiellement l'acétate de vinyle. Selon ce mode de réalisation particulier, de préférence le mélange monomère consiste en l'éthylène, l'acétate de vinyle et le monomère fonctionnel.

Dans le mode de réalisation particulier pour lequel l'oléfine terminale est un diène conjugué, en particulier le butadiène, l'isoprène ou leur mélange, cet autre monomère est préférentiellement un composé vinylaromatique ayant de 8 à 20 atomes de carbone, plus préférentiellement le styrène. Selon ce mode de réalisation particulier, de préférence le mélange monomère consiste en le diène conjugué, le composé vinylaromatique et le monomère fonctionnel.

Selon une deuxième variante de l'invention, le mélange monomère consiste en le monomère monofonctionnel et l'oléfine terminale. Cette variante permet de préparer des copolymères d'oléfine terminale et de monomère fonctionnel. Sachant que le monomère fonctionnel peut être un mélange de monomères fonctionnels utiles aux besoins de l'invention et que l'oléfine terminale peut être aussi un mélange d'oléfines terminales utiles aux besoins de l'invention, cette variante permet aussi de préparer des terpolymères ainsi que des copolymères présentant plus de trois motifs monomères.

Selon un mode de réalisation de l'invention, le mélange monomère avant polymérisation comprend entre 0,1 et 50% en moles de monomère fonctionnel.

Selon un mode de réalisation particulier de l'invention, le mélange monomère avant polymérisation comprend entre 0,1 et 20%, de préférence entre 0,1 et 15% en moles de monomère fonctionnel.

Selon un mode de réalisation préférentiel de l'invention, le mélange monomère avant polymérisation comprend entre 50% et 99,9% en moles d'oléfine terminale.

Dans le cas d'un batch alimenté, la concentration en un monomère est calculée sur la base de la somme totale de monomères introduits dans le réacteur, ce qui inclut aussi bien la quantité de monomères présents en début de polymérisation que la quantité de monomères ajoutés en cours de polymérisation.

Selon l'un quelconque des modes de réalisation de la première ou de la deuxième variante, de préférence la quantité d'oléfine terminale dans le mélange monomère avant polymérisation est telle que le copolymère préparé est un élastomère. Lorsque l'oléfine terminale est l'éthylène, un diène conjugué comme le butadiène ou l'isoprène, ou un mélange d'éthylène et de diène conjugué, l'oléfine terminale représente préférentiellement plus de 50% en masse du mélange monomère, plus préférentiellement plus de 60% en masse du mélange monomère.

Le copolymère, autre objet de l'invention, est susceptible d'être obtenu par le procédé conforme à l'invention selon l'un quelconque de ses modes de réalisation.

Selon un mode de réalisation préférentiel de l'invention, le copolymère est un copolymère statistique.

Selon un autre mode de réalisation de l'invention, le copolymère est un élastomère.

Selon un autre mode de réalisation préférentiel de l'invention, le copolymère est statistique et élastomère.

La masse molaire moyenne en nombre du copolymère conforme à l'invention peut largement varier. Elle est avantageusement comprise entre 1000 et 10 000 g/mol. Dans une autre variante, le copolymère a une masse molaire moyenne en nombre comprise entre 5 000 et 50 000 g/mol. Dans une autre variante, le copolymère a une masse molaire moyenne en nombre comprise entre 50 000 et 150 000 g/mol. Ces plages de masses molaires moyennes peuvent s'appliquer à l'un quelconque des modes de réalisation de l'invention.

La composition, autre objet de l'invention, a pour caractéristique essentielle d'être à base d'une matrice polymère contenant le copolymère conforme à l'invention, d'une charge renforçante et éventuellement d'un système de réticulation.

On entend par matrice polymère l'ensemble des polymères contenus dans la composition.

La matrice polymère de la composition conforme à l'invention a pour caractéristique essentielle de contenir le copolymère conforme à l'invention.

Selon un mode de réalisation de l'invention, le copolymère est un élastomère, de préférence contenant à titre des unités oléfine terminale des unités éthylène ou des unités diène conjugué, notamment des unités butadiène ou des unités isoprène. Selon ce mode de réalisation de l'invention, le copolymère sous forme élastomère représente de préférence au moins 50% en masse de la matrice polymère.

La matrice polymère peut comprendre en outre un autre élastomère, de préférence diénique.

Par élastomère (ou indistinctement "caoutchouc", les deux termes étant considérés comme synonymes) "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). A titre d'élastomère diénique convient par exemple tout élastomère diénique choisi dans le groupe des élastomères diéniques fortement insaturés (à savoir comprenant au moins 50% en poids d'unités d'origine diénique qui comportent une double liaison carbone carbone) constitué par les polybutadiènes (BR), les polyisoprènes, les copolymères de butadiène, les copolymères d'isoprène et leur mélange.

A titre de charge renforçante, on peut citer le noir de carbone, une charge inorganique renforçante telle que de la silice à laquelle est associé de manière connue un agent de couplage, ou encore un mélange de ces deux types de charge comme une silice renforçante ou un noir de carbone. L'agent de couplage, notamment un silane, (ou agent de liaison) est au moins bifonctionnel destiné à assurer une connexion suffisante, de nature chimique et/ou physique, entre la charge inorganique (surface de ses particules) et le polymère. On utilise en particulier des organosilanes ou des polyorganosiloxanes au moins bifonctionnels. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

La composition peut comporter également tout ou partie des additifs usuels habituellement utilisés dans les compositions polymères, comme par exemple des plastifiants ou des huiles d'extension, des pigments, des agents de protection tels que cires anti-ozone, anti-ozonants chimiques, anti-oxydants, des agents anti-fatigue, un système de réticulation.

Le choix du système de réticulation est fait en fonction de la structure chimique de la matrice polymère de la composition. Le taux du ou des composés qui constituent le système de réticulation introduit dans la composition est ajusté par l'homme du métier en fonction du degré de réticulation visé de la composition et de la nature chimique du système de réticulation. Ce taux de réticulation est défini selon la rigidité souhaitée de la composition à l'état réticulé, cette rigidité variant selon l'application envisagée de la composition.

Le système de réticulation peut être un système à base de soufre ou à base de peroxydes, le choix du système de réticulation étant orienté par la nature chimique de la matrice polymère à réticuler et l'usage de la composition. Typiquement, un système de réticulation à base de peroxydes sera préférentiellement choisi lorsque la matrice polymère à réticuler est dépourvue d'unité diénique. A l'inverse, un système à base de soufre sera préférentiellement choisi pour réticuler une matrice polymère pourvue d'unités diéniques.

Par exemple, lorsque le système de réticulation est un système à base de soufre, le soufre pouvant être apporté par un donneur de soufre, le système de réticulation peut comprendre de manière bien connue des accélérateurs ou retardateurs de vulcanisation, des activateurs de vulcanisation en plus du soufre ou du donneur de soufre. Le soufre est utilisé à un taux préférentiel compris entre 0,5 et 12 pce, en particulier entre 1 et 10 pce. L'accélérateur de vulcanisation est utilisé dans la composition de caoutchouc à un taux préférentiel compris entre 0,5 et 10 pce, plus préférentiellement compris entre 0,5 et 5,0 pce

Lorsque la réticulation chimique est effectuée au moyen d'un ou plusieurs composés peroxydes, le ou lesdits composés peroxydes représentent de 0.01 à 10 pce. A titre de composés peroxydes utilisables comme système de réticulation chimique, on peut citer les acyl peroxydes, les cétones peroxydes, les peroxyesters, les alkyl peroxides, par, les hydroperoxydes.

Avantageusement, la composition est caoutchoutique et est dite composition de caoutchouc et sa matrice polymère contient le copolymère sous forme d'élastomère et le cas échéant l'autre élastomère défini précédemment.

La composition de caoutchouc selon l'invention peut être fabriquée dans des mélangeurs appropriés, en utilisant par exemple deux phases de préparation successives selon une procédure générale bien connue de l'homme du métier: une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

De manière générale, tous les constituants de base de la composition de caoutchouc, à l'exception de l'agent de réticulation chimique, à savoir la charge renforçante, l'agent de couplage le cas échéant, sont incorporés de manière intime, par malaxage, à la matrice élastomère au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Après l'incorporation de tous les ingrédients de la composition de caoutchouc, la composition de caoutchouc finale ainsi obtenue est ensuite calandrée, par exemple sous la forme d'une feuille ou d'une plaque, notamment pour une caractérisation au laboratoire, ou encore extrudée, pour former par exemple un profilé utilisé comme composant, notamment pour la confection du pneumatique. La composition de caoutchouc conforme à l'invention peut être utilisée sous forme de calandrage dans un pneumatique. Le calandrage ou l'extrudat formé à partir de la composition de caoutchouc constitue en tout ou en partie un produit semi-fini, en particulier d'un pneumatique.

Ainsi selon un mode de réalisation particulier de l'invention, la composition de caoutchouc conforme à l'invention, pouvant être soit à l'état cru (avant réticulation ou vulcanisation), soit à l'état cuit (après réticulation ou vulcanisation), est dans un pneumatique, par exemple dans une bande de roulement de pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 120 min en fonction notamment de la température de cuisson, du système de réticulation adopté et de la cinétique de réticulation de la composition considérée.

L'invention concerne aussi bien le pneumatique à l'état cru (c'est-à-dire avant réticulation) qu'à l'état réticulé (c'est-à-dire après réticulation).

Les caractéristiques précitées de la présente invention, ainsi que d'autres, seront mieux comprises à la lecture de la description suivante de plusieurs exemples de réalisation de l'invention, donnés à titre illustratif et non limitatif.

### II-EXEMPLES DE REALISATION DE L'INVENTION :

### II-1. Méthodes de caractérisation :

### Résonance Magnétique Nucléaire (RMN ¹H ) :

Les déterminations des taux des différentes unités monomères et de leurs microstructures au sein des copolymères sont réalisées par analyse RMN. Les spectres sont acquis sur un spectromètre 300 MHz BRUKER équipé d'une sonde QNP à gradient 5 mm (**¹H, ¹³C, ¹⁹F, ³¹P**). L'expérience RMN ¹H quantitative, utilise une séquence simple impulsion 30° et un délai de répétition de 5 secondes entre chaque acquisition. Les échantillons sont solubilisés dans le chloroforme deutéré (CDCl₃).

### Chromatographie d'exclusion stérique (SEC) :

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage.

Préparation du polymère: Il n'y a pas de traitement particulier de l'échantillon de polymère avant analyse. Celui-ci est simplement solubilisé, dans du tétrahydrofuranne, à une concentration d'environ 1 g/l. Puis la solution est filtrée sur filtre de porosité 0,45µm avant injection.

Analyse SEC: L'appareillage utilisé est un chromatographe « VARIAN / GPC 50 PLUS ». Le solvant d'élution est du tétrahydrofuranne. Le débit est de 1 ml/min, la température du système de 35°C et la durée d'analyse de 35 min. On utilise un jeu de deux colonnes AGILENT en série, de dénominations commerciales « POLYPORE ».

Le volume injecté de la solution de l'échantillon de polymère est 100 µl. Le détecteur est un réfractomètre différentiel et le logiciel d'exploitation des données chromatographiques est le système « CIRRUS».

Les masses molaires moyennes calculées sont relatives à une courbe d'étalonnage réalisée à partir de polystyrènes (PS) étalons commerciaux.

### II-2. Synthèse des monomères fonctionnels :

### Exemple 1 : Synthèse du monomère 1 de formule (IIa) :

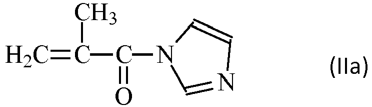

Dans un ballon bicol sont introduits 10 g d'imidazole (0.147 mol) ,17.17 g (0.17 mol) de triéthylamine et 60 g de THF. Le mélange réactionnel est maintenu à température ambiante puis on additionner le chlorure de méthacryloyle goutte à goutte et à contre-courant d'argon. Le mélange est ensuite laissé sous agitation à température ambiante pendant 2h. La conversion est totale au bout de deux heures. En fin de réaction, on filtre le sel de triéthylamine, on évapore le THF puis on réalise une extraction chloroforme / eau. On sèche la phase organique sur Na₂SO₄, on filtre et finalement on évapore. Le produit final est un liquide légèrement visqueux obtenu avec un rendement de 50%.

### Exemple 2 : Synthèse du monomère 2 de formule (la) :

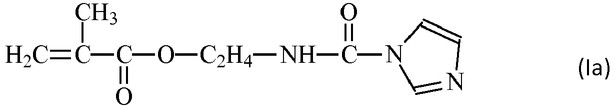

Dans un ballon bicol sont introduits successivement 7 g d'imidazole (0.1028 mol), 60 g de THF et 15.95 g (0.1028 mol) d'isocyanatoéthylméthacrylate. Le mélange est ensuite laissé sous agitation à température ambiante pendant 4h. La conversion est totale au bout de trois heures. Lorsque la conversion est totale, ajouter 150 ppm de 4-méthoxyphénol (soit 4 mg) afin de stabiliser le monomère. Précipiter ensuite dans le pentane (le 4-méthoxyphénol est également insoluble dans le pentane). Le produit final est une poudre blanche obtenue avec un rendement de 96%.

### II-3. Synthèse des copolymères portant des groupes pendants imidazole selon le procédé conforme à l'invention :

### Exemple 3 : par copolymérisation d'isoprène et du monomère 1 :

Dans un réacteur autoclave de 300 ml sont introduits successivement 16.3 g de monomère 1 (0.12 mol.), 73.29 g d'isoprène (1.078 mol), 70 g de toluène et finalement 3.13 g (0.018 mol) d'AIBN. Le milieu réactionnel est mis sous agitation magnétique et chauffé à 70°C pendant 16 heures. En fin de réaction, le copolymère est précipité deux fois dans le méthanol. Le produit final est un élastomère translucide.

Le produit final est analysé par SEC : Mn(eq-PS) = 4880 g/mol ; Mw(eq-PS) = 8520 g/mol ; Ip = 1,74

Le produit final est analysé par RMN ¹H : la composition du copolymère, exprimée en fraction molaire, est la suivante :
x=0,06 (monomère 1) ; y=0,94 (isoprène)

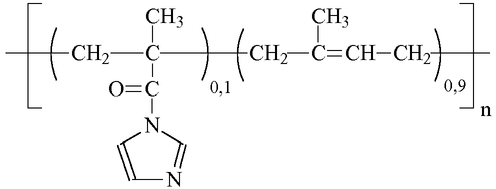

### Exemple 4 : par copolymérisation d'isoprène et du monomère 2 :

Dans un réacteur autoclave de 300 ml sont introduits successivement 22.8 g de monomère 2 (0.102 mol.), 62.51 g d'isoprène (0.919 mol), 50 g de toluène et finalement 2.67 g (0.0153 mol) d'AIBN. Le milieu réactionnel est mis sous agitation magnétique et chauffé à 70°C pendant 16 heures. En fin de réaction, le copolymère est précipité deux fois dans le méthanol. Le produit final est un copolymère translucide.

Le produit final est analysé par SEC: Mn(eq-PS) = 7020 g/mol; Mw(eq-PS) = 14800 g/mol ; Ip = 2.10

Le produit final est analysé par RMN ¹H : la composition du copolymère, exprimée en fraction molaire, est la suivante :
x=0,08 (monomère 2) ; y=0,92 (isoprène)

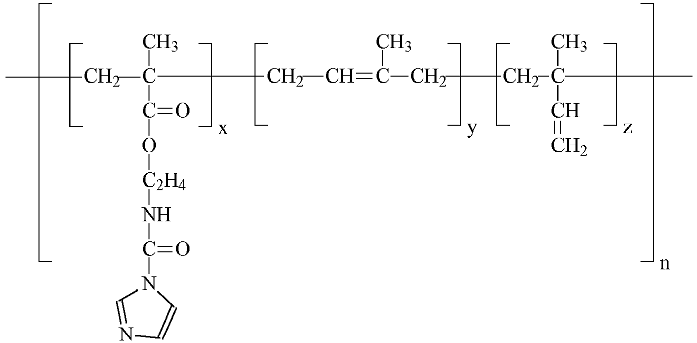

## Revendications

1. Procédé de synthèse d'un copolymère portant des groupes pendants imidazole, lequel procédé comprend la copolymérisation radicalaire d'un mélange monomère comprenant une oléfine terminale et un monomère fonctionnel portant un groupe (méth)acryloyle et un groupe imidazole, l'oléfine terminale étant l'éthylène, un diène conjugué ou leur mélange, le diène conjugué étant le butadiène, l'isoprène ou un mélange de butadiène et d'isoprène, le mélange monomère avant polymérisation comprenant entre 50% et 99,9% en moles d'oléfine terminale.

2. Procédé selon la revendication 1 dans lequel la copolymérisation radicalaire est une copolymérisation statistique.

3. Procédé selon l'une quelconque des revendications 1 à 2 dans lequel le mélange monomère consiste en l'oléfine terminale et le monomère fonctionnel.

4. Procédé selon l'une quelconque des revendications 1 à 3 dans lequel le mélange monomère avant polymérisation comprend entre 0,1 et 50% en mole de monomère fonctionnel.

5. Procédé selon l'une quelconque des revendications 1 à 4 dans lequel le mélange monomère avant polymérisation comprend entre 0,1 et 20%, de préférence entre 0,1 et 15% en moles de monomère fonctionnel.

6. Procédé selon l'une quelconque des revendications 1 à 5 dans lequel le monomère fonctionnel est choisi parmi le monomère de formule (I), le monomère de formule (II) et leur mélange, 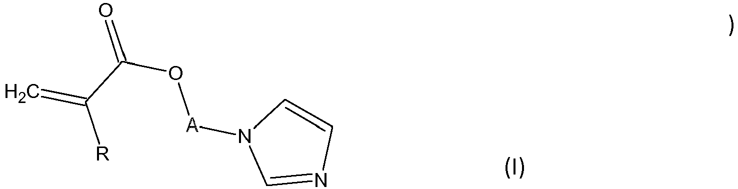 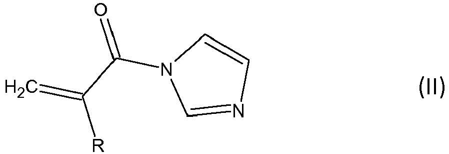
R étant méthyle ou hydrogène,
A étant un groupement alkylène pouvant contenir un ou plusieurs hétéroatomes.

7. Procédé selon la revendication 6 dans lequel le monomère fonctionnel est un isocyanatoalkyl(méth)acrylate dont la fonction isocyanate est bloquée par le groupe imidazole.

8. Procédé selon la revendication 7 dans lequel A représente A1-NH-CO, A1 étant un groupe alkylène comportant de préférence 1 à 6 atomes de carbone.

9. Procédé selon la revendication 8 dans lequel A1 est le groupement 1,2-éthanediyle.

10. Procédé selon l'une quelconque des revendications 1 à 6 dans lequel le monomère fonctionnel est N-acryloylimidazole ou le N-méthacryloylimidazole.

11. Copolymère susceptible d'être obtenu par le procédé défini selon l'une quelconque des revendications 1 à 10.

12. Copolymère selon la revendication 11, lequel copolymère est un élastomère.

13. Composition à base d'une charge renforçante, d'un système de réticulation et d'une matrice polymère contenant le copolymère défini selon la revendication 11 ou 12.

14. Composition selon la revendication 13, dans laquelle le copolymère est un élastomère et représente au moins 50% en masse de la matrice polymère.

15. Pneumatique qui comprend une composition définie selon la revendication 13 ou 14.

## Patentansprüche

1. Verfahren zur Synthese eines Copolymers mit Imidazol-Seitengruppen, wobei das Verfahren die radikalische Copolymerisation einer Monomerenmischung, die ein endständiges Olefin und ein funktionelles Monomer mit einer (Meth)acryloyl-gruppe und einer Imidazolgruppe umfasst, umfasst, wobei es sich bei dem endständigen Olefin um Ethylen, ein konjugiertes Dien oder eine Mischung davon handelt, wobei es sich bei dem konjugierten Dien um Butadien, Isopren oder eine Mischung von Butadien und Isopren handelt, wobei die Monomerenmischung vor der Polymerisation zwischen 50 und 99,9 Mol-% endständiges Olefin umfasst.

2. Verfahren nach Anspruch 1, wobei es sich bei der radikalischen Copolymerisation um eine statistische Copolymerisation handelt.

3. Verfahren nach einem der Ansprüche 1 bis 2, wobei die Monomerenmischung aus dem endständigen Olefin und dem funktionellen Monomer besteht.

4. Verfahren nach einem der Ansprüche 1 bis 3, wobei die Monomerenmischung vor der Polymerisation zwischen 0,1 und 50 Mol-% funktionelles Monomer umfasst.

5. Verfahren nach einem der Ansprüche 1 bis 4, wobei die Monomerenmischung vor der Polymerisation zwischen 0,1 und 20 Mol-%, vorzugsweise zwischen 0,1 und 15 Mol-%, funktionelles Monomer umfasst.

6. Verfahren nach einem der Ansprüche 1 bis 5, wobei das funktionelle Monomer aus dem Monomer der Formel (I), dem Monomer der Formel (II) und einer Mischung davon ausgewählt wird, 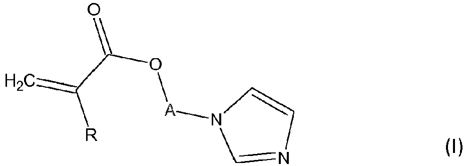 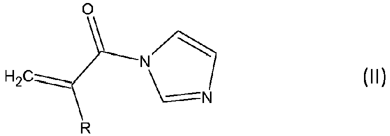
wobei R für Methyl oder Wasserstoff steht,
wobei A für eine Alkylengruppe, die ein oder mehrere Heteroatome enthalten kann, steht.

7. Verfahren nach Anspruch 6, wobei es sich bei dem funktionellen Monomer um ein Isocyanatoalkyl-(meth)acrylat, dessen Isocyanatfunktion durch eine Imidazolgruppe blockiert ist, handelt.

8. Verfahren nach Anspruch 7, wobei A für A1-NH-CO steht, wobei A1 für eine Alkylengruppe steht, die vorzugsweise 1 bis 6 Kohlenstoffatome umfasst.

9. Verfahren nach Anspruch 8, wobei A1 für die 1,2-Ethandiylgruppe steht.

10. Verfahren nach einem der Ansprüche 1 bis 6, wobei es sich bei dem funktionellen Monomer um N-Acryloylimidazol oder N-Methacryloylimidazol handelt.

11. Copolymer, das durch das Verfahren gemäß einem der Ansprüche 1 bis 10 erhältlich ist.

12. Copolymer nach Anspruch 11, wobei es sich bei dem Copolymer um ein Elastomer handelt.

13. Zusammensetzung auf Basis von einem verstärkenden Füllstoff, einem Vernetzungssystem und einer Polymermatrix, die das Copolymer gemäß Anspruch 11 oder 12 enthält.

14. Zusammensetzung nach Anspruch 13, wobei das Copolymer ein Elastomer ist und mindestens 50 Massen-% der Polymermatrix ausmacht.

15. Reifen, der eine Zusammensetzung gemäß Anspruch 13 oder 14 umfasst.

## Claims

1. Process for synthesizing a copolymer bearing imidazole pendant groups, which process comprises the radical copolymerization of a monomer mixture comprising a terminal olefin and a functional monomer bearing a (meth)acryloyl group and an imidazole group, the terminal olefin being ethylene, a conjugated diene or the mixture thereof, the conjugated diene being butadiene, isoprene or the mixture thereof, the monomer mixture before polymerization comprising between 50 mol% and 99.9 mol% of terminal olefin.

2. Process according to Claim 1, in which the radical copolymerization is a statistical copolymerization.

3. Process according to any one of Claims 1 to 2, in which the monomer mixture consists of the terminal olefin and the functional monomer.

4. Process according to any one of Claims 1 to 3, in which the monomer mixture before polymerization comprises between 0.1 mol% and 50 mol% of functional monomer.

5. Process according to any one of Claims 1 to 4, in which the monomer mixture before polymerization comprises between 0.1 mol% and 20 mol%, preferably between 0.1 mol% and 15 mol% of functional monomer.

6. Process according to any one of Claims 1 to 5, in which the functional monomer is selected from the monomer of formula (I), the monomer of formula (II) and the mixture thereof, 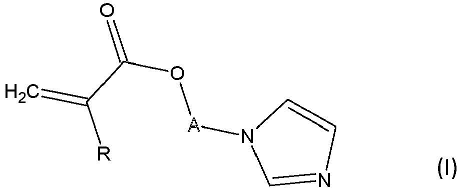 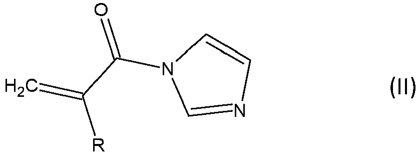 R being methyl or hydrogen,
A being an alkylene group that may contain one or more heteroatoms.

7. Process according to Claim 6, in which the functional monomer is an isocyanatoalkyl (meth)acrylate, the isocyanate function of which is blocked by the imidazole group.

8. Process according to Claim 7, in which A represents A1-NH-CO, A1 being an alkylene group preferably comprising from 1 to 6 carbon atoms.

9. Process according to Claim 8, in which A1 is the 1,2-ethanediyl group.

10. Process according to any one of Claims 1 to 6, in which the functional monomer is N-acryloylimidazole or N-methacryloylimidazole.

11. Copolymer capable of being obtained by the process defined according to any one of Claims 1 to 10.

12. Copolymer according to Claim 11, which copolymer is an elastomer.

13. Composition based on a reinforcing filler, a crosslinking system and a polymer matrix containing the copolymer defined according to Claim 11 or 12.

14. Composition according to Claim 13, in which the copolymer is an elastomer and represents at least 50% by weight of the polymer matrix.

15. Tyre which comprises a composition defined according to Claim 13 or 14.
